# EUROPÄISCHE PATENTSCHRIFT

(11) **EP 0 342 540 B1**
(45) Veröffentlichungstag und Bekanntmachung des Hinweises auf die Patenterteilung: **27.07.1994**
(21) Anmeldenummer: 89108582.1
(22) Anmeldetag: 12.05.1989
(51) Int. Cl.: B60M 1/18

(54) **Streckentrenner in Fahrleitungen**
Section insulator in traction lines
Isolateur de sections dans des lignes de traction

(30) Priorität: 18.05.1988 DE 3816841
(43) Veröffentlichungstag der Anmeldung: 23.11.1989
(73) Patentinhaber: Asea Brown Boveri Aktiengesellschaft, 68309 Mannheim (DE)
(72) Erfinder: Kielgas, Hans, D-6940 Weinheim (DE)
(74) Vertreter: Rupprecht, Klaus, Dipl.-Ing.

(56) Entgegenhaltungen:
- DE-A- 2 548 986
- DE-A- 3 321 465

## Beschreibung

Die Erfindung bezieht sich auf einen Streckentrenner zur elektrischen Trennung eines ersten und eines zweiten Abschnittes einer elektrischen Fahrleitung für Triebfahrzeuge mit einem die Abschnitte elektrisch trennenden Isolierkörper, an dem zur Befahrbarkeit durch Stromabnehmer mit dem ersten Abschnitt elektrisch verbundene und in den zweiten Abschnitt hineinreichende Schleifkufen vorgesehen sind und eine von dem Isolierkörper ausgehende und gegenüber den Schleifkufen und dem zweiten Fahrleitungsabschnitt isolierte Hilfselektrode über den aus Schleifkufen und zweitem Fahrleitungsabschnitt gebildeten Überlappungsbereich in den zweiten Fahrleitungsabschnitt hineinreicht, und die Antriebsspule eines Schalters zwischen der Hilfselektrode und dem zweiten Fahrleitungsabschnitt eingeschaltet ist, und der Fußpunkt eines beim Vorübergleiten des Stromabnehmers am Streckentrenner auftretenden Lichtbogens von dem zweiten Fahrbahnabschnitt auf die Hilfselektrode kommutiert und der Lichtbogenstrom den Schalter zum Ansprechen bringt, der den Lichtbogen durch Überbrücken löscht, und nach Löschen des Lichtbogens der Schalter über eine Verzögerungseinrichtung in den vorherigen Schaltzustand zeitverzögert zurückkehrt.

Bei elektrischen Bahnen mit Oberleitungsbetrieb wird die Fahrleitung aus betrieblichen Gründen in einzelne Fahrleitungstabschnitte unterteilt. Die Unterteilung erfolgt durch als Streckentrenner bezeichnete Isolatoren, welche in die Fahrleitung eingesetzt sind. Zur Befahrbarkeit durch den Stromabnehmer des Fahrzeuges sind die Streckentrenner mit Schleifkufen versehen. Der Stromabnehmer des Triebfahrzeuges läuft dann von der Fahrleitung auf die Kufen ohne Stromunterbrechung. Bei unterschiedlichem elektrischem Potential zwischen zwei Fahrleitungsabschnitten kann der passierende Stromabnehmer des Triebfahrzeuges einen Leistungslichtbogen ziehen, der den Streckentrenner zerstören kann. Man hat versucht, die Zerstörung des Streckentrenners durch Löschen des Lichtbogens zu vermeiden.

Aus der DE-PS 25 48 986 ist eine Anordnung bekanntgeworden, bei der der Lichtbogen von einem Schalter zur Löschung überbrückt wird. Hierbei ist die Antriebsspule des Schalters zwischen einer Hilfselektrode, die isoliert gegenüber dem zweiten Fahrleitungsabschnitt und den Schleifkufen angeordnet ist und in den zweiten Fahrleitungsabschnitt hineinreicht, und dem zweiten Fahrleitungsabschnitt eingeschaltet. Der Fußpunkt des Lichtbogens kommutiert daher von dem zweiten Fahrleitungsabschnitt auf die Hilfselektrode, so daß der Lichtbogenstrom durch die Antriebsspule fließt. Dieser Lichtbogenstrom schwankt allerdings in weiten Grenzen, so daß auch die auftretenden Anzugskräfte großen Schwankungen unterworden sind. Ein sicheres Betätigen des Schalters ist bei dieser bekannten Anordnung daher nicht immer sichergestellt, so daß es trotzdem noch zu Zerstörungen des Streckentrenners kommen kann.

Aufgabe der Erfindung ist es, den bekannten Streckentrenner derart zu verbessern, daß bei Auftreten eines Lichtbogens sichergestellt ist, daß der Schalter zur Überbrückung des Lichtbogens mit Sicherheit schaltet und zwar soll der Schalter mit einer bestimmten Verzögerung (z.B. 80 ms) anziehen und mit einer wesentlich größeren Abfallverzögerung von z.B. 200 ms öffnen, um z.B. ein Wiederzünden des Lichtbogens nach nur kurzzeitigem Löschen zu vermeiden.

Gelöst wird diese Aufgabe gemäß der Erfindung dadurch, daß die Antriebsspule des Schalters an die Hilfselektrode und den zweiten Fahrleitungsabschnitt mittelbar über einen Sättigungsstromwandler, dessen an die Antriebsspule angeschaltete Sekundärspannung konstant und unabhängig von der Höhe des in der Primärwicklung fließenden Lichtbogenstromes ist, geschaltet ist. Besonders vorteilhaft ist es, an die Sekundärwicklung des Sättigunsstromwandlers einen Gleichrichter zur Gleichrichtung der Ausgangswechselspannung zu schalten und die Antriebsspule des Schalters als Gleichstromantriebsspule auszubilden, da diese kompakter gebaut werden kann als eine Wechselstromantriebsspule. Die Primärwicklung des Sättigungsstromwandlers ist an die Hilfelektrode und den zweiten Fahrleitungsabschnitt geschaltet, während vorteilhafterweise an die Sekundärwicklung ein Verzögerungsschalter geschaltet ist, der die gleichgerichtete Sekundärspannung nach Ablauf der Verzögerung an die Antriebsspule des Schalters durchschaltet. Weiterhin ist es zweckmäßig zur Vermeidung von Spannungsspitzen an der Sekundärseite des Sättigungsstromwandlers einen spannungsabhängigen Widerstand anzuschalten.

Um die erforderliche Abfallverzögerung zu erhalten, wird der Kontaktträger des Schalters mit einer Einschaltverriegelung versehen, die von einem Hilfsmagneten bis zu einem vorgebbaren Verzögerungswert nach Verlöschen des Lichtbogens gehalten wird. Die Verzögerungszeit zwischen Verlöschen des Lichtbogens und Abfall des Hilfsmagneten kann über einen parallel zur Hilfsmagnetspule liegenden Kondensator, der über eine Diode während des Brennens des Lichtbogens aufgeladen wird, eingestellt werden. Es ist jedoch besonders vorteilhaft, einen elektronischen Verzögerungsschalter vorzusehen, der von dem Kondensator gespeist wird; in diesem Fall muß der parallel zu dem Eingang des elektronischen Schalters geschaltete Kondensator größer sein, als die erforderliche Dimensionierung des Kondensators zur Erreichung der Abfallverzögerung bei Parallelschaltung von Kondensator und Hilfsmagnetspule.

Die Figuren zeigen ein Ausführungsbeispiel der Erfindung.

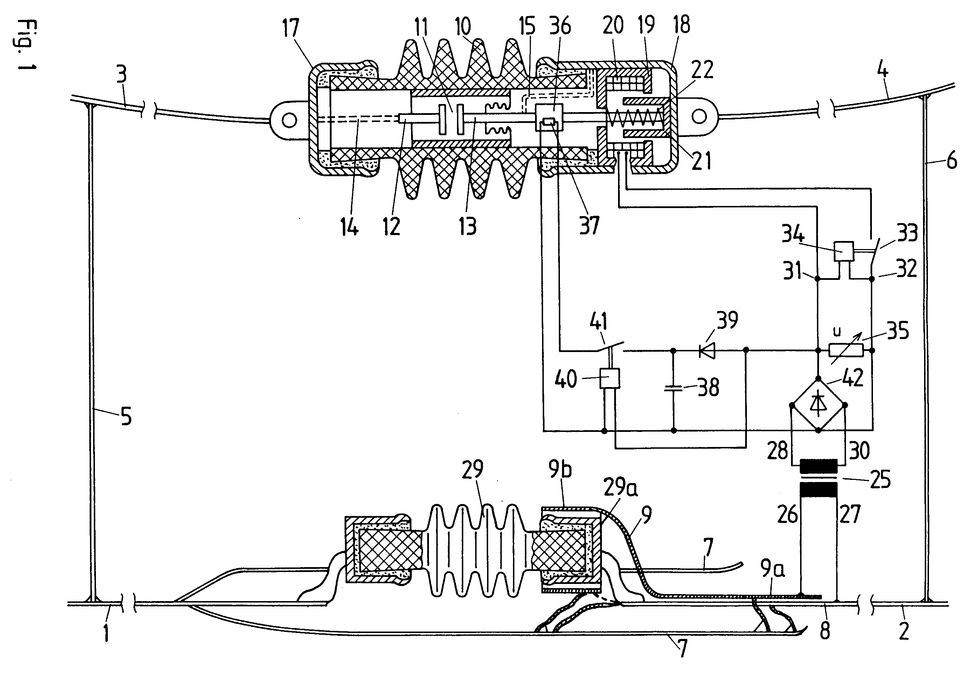

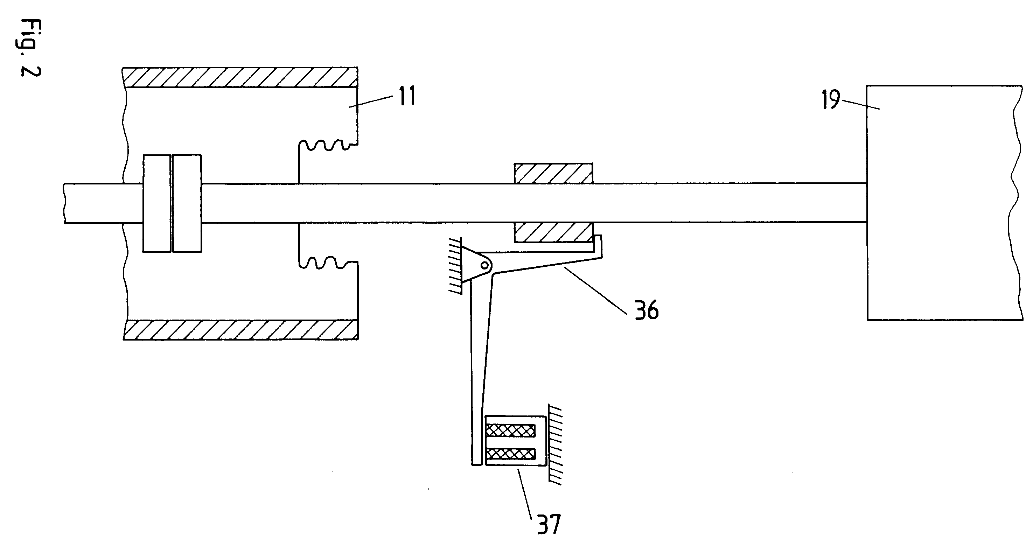

In Fig. 1 ist der Streckentrenner mit den beiden Fahrleitungsabschnitten und dem Überbrückungsschalter im Ruhezustand dargestellt und in Fig. 2 Einzelheiten aus der Art der Verriegelung des Schalters während der Abfallverzögerung.

Die Fig. 1 zeigt eine Trennstelle zwischen zwei Fahrleitungsabschnitten. Der linke Endabschnitt der Fahrleitung ist mit 1 bezeichnet, der rechte Fahrleitungsabschnitt mit 2. Oberhalb der Fahrleitungsabschnitte 1 und 2 sind Tragseilabschnitte 3 und 4 vorgesehen; dabei ist der Fahrleitungsabschnitt 1 über einen Stromverbinder 5 mit dem Tragseil 3 und der Fahrleitungsabschnitt 2 über einen Stromverbinder 6 mit dem Tragseil 4 verbunden. Der Fahrleitungsabschnitt 1 ist mit einem am Isolator 29 vorbeiführenden Schleifkufenpaar 7 verbunden, das sich mit dem Fahrleitungsende 8 des Fahrleitunggsabschnittes 2 soweit überlappt, daß beim Überfahren durch ein Stromabnehmerschleifstück immer eine elektrische Verbindung gewährleistet ist. Eine Hilfselektrode 9 ist mit ihrem langgestreckten Abschnitt 9a im Überlappungsbereich nahe dem Fahrdrahtende 8 isoliert angeordnet, wobei der Abschnitt 9a noch etwa über die beiden offenen Enden des Schleifkufenpaares 7 hinausragt. Der Abschnitt 9b der Hilfselektrode 9 umgibt die Isolatorarmatur 29a in Form eines Rohres oder Käfigs.

Der Überbrückungsschalter, der oberhalb der Trennstelle der beiden Fahrleitungen vorgesehen ist, besitzt im Inneren eines Isolators 10 die Schalteinheit 11, die vorzugsweise als Vakuumschalter ausgebildet ist. In dieser ist ein feststehendes Kontaktstück 12 und ein bewegliches Kontaktstück 13 vorgesehen, welche durch Zuleitungen 14 und 15 leitend mit den Isolatorarmaturen 17 und 18 verbunden sind.

In der zylindrischen Armutur 18 ist der als Tauchkernmagnet ausgebildeter Magnetantrieb untergebracht. Es können auch andere Magnetformen verwendet werden. Der Magnetantrieb besteht aus dem feststehenden Magnetteil 19 mit der Antriebsspule 20 und dem beweglichen Tauchkern 21. In der dargestellten Ausschaltstellung wird der Tauchkern durch die Ausschaltfeder 22 gegen einen Anschlag gedrückt. Hierdurch wird das bewegliche Kontaktstück 13 entgegen der in Schließrichtung wirkenden atmosphärischen Kraft in der Ausschaltstellung gehalten.

Die Spule 20 des Antriebsmagneten 19 wird von dem Sättigungsstromwandler 25 mit Strom versorgt. Die Primärwicklung dieses Stromwandlers ist über die Leitungen 26 und 27 mit der Hilfselektrode 9 und dem zweiten Fahrleitungsabschnitt 2 verbunden. Die Primärwicklung wird daher von dem Lichtbogenstrom durchflossen. Der Kern des Sättigungsstromwandlers besteht aus Eisen mit einer nahezu rechteckförmigen Magnetisierungskennlinie. Hierdurch wird erreicht, daß die von der Sekundärwicklung über die Leitungen 28 und 30 abgegebene Spannungszeitfläche unabhängig vom stark unterschiedlichen Primärstrom des Wandlers nahezu konstant ist. Die Sekundärspannung wird in dem Gleichrichter 42 gleichgerichtet und über die Leitungen 31 und 32 der Spule 20 des Antriebsmagneten zugeleitet. In der Leitung 32 ist ein Unterbrechungskontakt 33 angeordnet, der von dem elektronischen Verzögerungsschalter 34 betätigt wird. Weiterhin ist ein spannungsabhängiger Widerstand 35 am Ausgang des Gleichrichters 42 zwischen den Leitungen 31 und 32 vorgesehen. Dieser als Spannungsbegrenzer wirkende spannungsabhängige Widerstand absobiert die bei hohen Primärströmen auftretenden Stromspitzen in der Sekundärwicklung des Stromwandlers. Um die erforderliche Kontaktschließgeschwindigkeit des Vakuumschalters zu erreichen, wird die Magnetspule 20 mit einer bestimmten Überspannung betrieben. Die Anzugszeit des Magnetes ist bei dieser Überspannung erheblich kleiner als der vorgegebene Wert von ca. 80 ms. Daher wird das Verzögerungsglied 34 vorgesehen, das den Kontakt 33 mit einer einstellbaren Verzögerung derart schließt, daß der Überbrückungsschalter nach einer vorgegebenen Zeit von z.B. 80 ms mit Sicherheit schaltet.

Die notwendige Abfallverzögerung von 200 ms läßt sich nur durch sehr starke Übererregung des Magneten und/oder eine Parallelschaltung eines Kondensators zur Magnetspule erreichen. In diesen Fällen würde aber die erforderliche Kontaktöffnungsgeschwindigkeit nicht erreicht, da die Magnetkraft sehr langsam abnimmt und die Federkraft nur langsam zu überwiegen beginnt.

Es ist daher eine Verriegelung 36 vorgesehen, die das bewegliche Kontaktstück 13 im eingeschalteten Zustand festhält, solange der Hilfsmagnet 37 erregt ist. Der Hilfsmagnet 37 und ein parallelgeschalteter Kondensator 38 sind über eine Diode 39 mit dem Gleichrichter 42 verbunden. Der Kondensator wird aufgeladen, solange der Lichtbogenstrom fließt und der Wandler 25 Spannung abgibt. Nach Verlöschen des Lichtbogens wird der Antriebsmagnet 20 entsprechend seiner Zeitkonstante sehr schnell entregt, so daß die Federkraft der Rückstellfeder 22 überwiegt. Die Verriegelung 36 verhindert jedoch ein Rückstellen des beweglichen Kontaktstückes 13. Nach einer durch die Kapazität des Kondensators 38 und die Hilfsmagnetspule 37 vorgegebenen Verzögerungszeit wird die Einschaltverriegelung freigegeben und der Vakuumschalter öffnet mit der erforderlichen Kontaktgeschwindigkeit.

Damit die Abfallzeit unabhängig von Veränderungen der Kapazität des Kondensators 38 und der Daten des Hilfsmagneten 37 ist, ist, nach einer anderen Ausührung der Erfindung, ein weiteres elektronisches Verzögerungsglied 40 vorgesehen, das die Verbindung zwischen dem Kondensator 38 und der Hilfsmagnetspule 37 unterbricht. Bei einer derartigen Anordnung muß die Kapazität des Kondensators 38 größer gewählt werden, als bei einer Realisierung der Abfallverzögerung nur durch Kondensator und Hilfsmagnetspule, da der Kondensator 38 bei der dargestellten zusätzlichen Anordnung des elektronischen Verzögerungsgliedes 40 auch dieses Glied über die Abfallverzögerung hinaus speisen muß und die Abfallzeit nur durch das elektronische Verzögerungsglied bestimmt wird.

## Patentansprüche

1. Streckentrenner zur elektrischen Trennung eines ersten und eines zweiten Abschnittes einer elektrischen Fahrleitung für Triebfahrzeuge mit einem die Abschnitte elektrisch trennden Isolierkörper (29), an dem zur Befahrbarkeit durch den Stromabnehmer mit dem ersten Abschnitt (1) elektrisch verbundene und in den zweiten Abschnitt (2) hineinreichende Schleifkufen (7) vorgesehen sind, und eine von dem Isolierkörper (29) ausgehende und gegenüber den Schleifkufen (7) und dem zweiten Fahrleitungsabschnitt (2) isolierte Hilfselektrode (9) über den aus Schleifkufen (7) und zweitem Fahrleitungsabschnitt (2) gebildeten Überlappungsbereich in den zweiten Fahrleitungsabschnitt (2) hineinreicht, und die Antriebsspule (20) eines Schalters (11) zwischen der Hilfselektrode (9) und dem zweiten Fahrleitungsabschnitt (2) eingeschaltet ist, und der Fußpunkt eines bei Vorübergleiten des Stromabnehmers am Streckentrenner auftretenden Lichtbogens von dem zweiten Fahrleitungsabschnitt (2) auf die Hilfselektrode (9) kommutiert und der Lichtbogenstrom den Schalter (11) zum Ansprechen bringt, der den Lichtbogen durch Überbrücken löscht, und nach Löschen des Lichtbogens der Schalter (11) über eine Verzögerungseinrichtung (38,40) in den vorherigen Schaltzustand zeitverzögert zurückkehrt, dadurch gekennzeichnet, daß die Antriebsspule (20) des Schalters (11) an die Hilfselektrode (9) und den zweiten Fahrleitungsabschnitt (2) mittelbar über einen Sättigungsstromwandler (25), dessen an die Antriebsspule (20) angeschaltete Sekundärspannung konstant und unabhängig von der Höhe des in der Primärwicklung fließenden Lichtbogenstromes ist, geschaltet ist.

2. Streckentrenner nach Anspruch 1, dadurch gekennzeichnet, daß an die Sekundärwicklung des Sättigunsstromwandlers (25) ein Gleichrichter (42) zur Gleichrichtung der Ausgangswechselspannung geschaltet ist und daß die Antriebsspule (20) des Schalters als Gleichstromantriebsspule ausgelegt ist.

3. Streckentrenner nach einem der Ansprüche 1 bis 2, dadurch gekennzeichnet, daß an der Sekundärseite des Sättigungsstromwandlers (25) ein spannungsabhängiger Widerstand (35) angeschaltet ist.

4. Streckentrenner nach einem der Ansprüche 1 bis 3, dadurch gekennzeichnet, daß die Sekundärspannung des Sättigungsstromwandlers (25) mit einer durch ein elektronisches Zeitglied (34) vorgebbaren Verzögerungszeit über den Schalter (33) an die Antriebsspule (20) geschaltet wird.

5. Streckentrenner nach einem der Ansprüche 1 bis 4, dadurch gekennzeichnet, daß die Primärwicklung des Sättigungsstromwandlers (25) an die Hilfselektrode (9) und den zweiten Fahrdrahtabschnitt (2) und der Verzögerungsschalter (34) an die Sekundärwicklung geschaltet sind und der Verzögerungsschalter die Sekundärspannung nach Ablauf der Verzögerung an die Antriebsspule (20) des Schalters durchschaltet (mittels Kontakt 33).

6. Streckentrenner nach einem der Ansprüche 1 bis 5, dadurch gekennzeichnet, daß der bewegliche Kontaktträger (13) des Schalters eine Einschaltverriegelung (36) besitzt, die von einem Hilfsmagneten (37) bis zu einer vorgebbaren Verzögerungszeit nach Verlöschen des Lichtbogens gehalten wird.

7. Streckentrenner nach einem der Ansprüche 1 bis 6, dadurch gekennzeichnet, daß die Verzögerungsszeit zwischen Verlöschen des Lichtbogens und Abfall des Hilfsmagneten (37 über einen parallel zur Hilfsmagnetspule (37) liegenden Kondensator (38), der über eine Diode (39) aus dem Sättigungsstromwandler (25) während des Brennens des Lichtbogens aufgeladen wird, erreicht wird.

8. Streckentrenner nach einem der Ansprüche 1 bis 7, dadurch gekennzeichnet, daß zur exakten Einhaltung der Verzögerung zwischen Verlöschen des Lichtbogens und Abfall des Hilfsmagneten (37) ein elektronischer Verzögerungsschalter (40) vorgesehen ist, der den Hilfsmagneten (37) abschaltet (mittels Kontakt 41), wobei die Kapazität des parallel zu dem Eingang des elektronischen Schalters (40) geschaltetem Kondensators (38) größer ist als die erforderliche Dimensionierung zur Erreichung der Abfallverzögerung bei Parallelschaltung von Kondensator und Hilfsmagnetspule.

## Claims

1. Section isolator for electrically isolating a first and a second section of an electric contact line for tractive units with an isolating element (29) which electrically isolates the sections, on which element (29) collector slipper runners (7) which are electrically connected to the first section (1) and extend into the second section (2) are provided in order to permit the current collector to pass, and an auxiliary electrode (9) which emerges from the insulating element (29) and is insulated with respect to the collector slipper runners (7) and the second contact line section (2) extends via the overlapping area formed of collector slipper runners (7) and second contact line section (2) into the second contact line section (2), and the drive coil (20) of a switch (11) is connected between the auxiliary electrode (9) and the second contact line section (2), and the base point of an arc which occurs when the current collector slides past the section isolator commutates from the second contact line section (2) to the auxiliary electrode (9) and the arc current triggers the switch (11) which extinguishes the arc by shorting, and after the arc is extinguished, the switch (11) returns after a delay into the previous switching state by means of a delay device (38,40), characterized in that the drive coil (20) of the switch (11) is connected to the auxiliary electrode (9) and the second contact line section (2) indirectly by means of a saturation current transformer (25) whose secondary voltage which is connected to the drive coil (20) is constant and is independent of the level of the arc flowing in the primary winding.

2. Section isolator according to Claim 1, characterized in that a rectifier (42) for rectifying the alternating output voltage is connected to the secondary winding of the saturation current transformer (25), and in that the drive coil (20) of the switch is designed as a direct current drive coil.

3. Section isolator according to one of Claims 1 to 2, characterized in that a voltage-dependent resistor (35) is connected on the secondary side of the saturation current transformer (25).

4. Section isolator according to one of Claims 1 to 3, characterized in that the secondary voltage of the saturation current transformer (25) is connected via the switch (33) to the drive coil (20) with a delay time which can be predetermined by an electronic timing element (34).

5. Section isolator according to one of Claims 1 to 4, characterized in that the primary winding of the saturation current transformer (25) is connected to the auxiliary electrode (9) and the second contact wire section (2) and the delay switch (34) is connected to the secondary winding and the delay switch connects through the secondary voltage to the drive coil (20) of the switch (by means of contact 33) after the delay ends.

6. Section isolator according to one of Claims 1 to 5, characterized in that the movable contact carrier (13) of the switch has a switch-on locking element (36) which is held by an auxiliary magnet (37) up to a predetermined delay time after the arc is extinguished.

7. Section isolator according to one of Claims 1 to 6, characterized in that the delay time between the extinguishing of the arc and dropout of the auxiliary magnet (37) is achieved by means of a capacitor (38) which is located parallel to the auxiliary magnet coil (37) and is charged during the arcing via a diode (39) from the saturation current transformer (25).

8. Section isolator according to one of Claims 1 to 7, characterized in that in order to observe the delay between the extinguishing of the arc and the dropout of the auxiliary magnet (37) exactly, an electronic delay switch (40) is provided which switches off the auxiliary magnet (37) (by means of contact 41), the capacitance of the capacitor (38) which is connected parallel to the input of the electronic switch (40) being greater than the required dimensioning in order to achieve the dropout delay when capacitor and auxiliary magnet coil are connected in parallel.

## Revendications

1. Isolateur de section pour séparer électriquement une première et une deuxième section d'une caténaire électrique pour des véhicules moteurs, comportant un isolateur (29) qui sépare électriquement les sections, dans lequel il est prévu, aux fins de permettre le passage d'un pantographe, des patins (7) qui sont liés électriquement à la première section (1) et s'étendent jusque dans la deuxième section (2), une électrode auxiliaire (9) qui part de l'isolateur (29), est isolée par rapport aux patins (7) et à la deuxième section de caténaire (2) et s'étend jusque dans la deuxième section de caténaire (2), au-dessus de la zone de recouvrement formée par les patins (7) et ladite deuxième section de caténaire (2), la bobine d'actionnement (20) d'un contacteur (11) est intercalée entre l'électrode auxiliaire (9) et la deuxième section de caténaire (2), la racine d'un arc électrique produit lors du passage du pantographe sur l'isolateur de section est commuté de la deuxième section de caténaire (2) vers l'électrode auxiliaire (9) et le courant d'arc entraîne le déclenchement du contacteur (11) qui éteint l'arc par pontage et, après extinction de l'arc, le contacteur (11) temporisé par un dispositif de temporisation (38,40) revient dans son état précédent, caractérisé par le fait que la bobine d'actionnement (20) du contacteur (11) est connectée indirectement à l'électrode auxiliaire (9) et à la deuxième section de caténaire (2) par l'intermédiaire d'un convertisseur de courant saturé (25), dont la tension secondaire appliquée à la bobine d'actionnement (20) est constante et ne dépend pas de la valeur du courant d'arc qui circule dans l'enroulement primaire.

2. Isolateur de section selon la revendication 1, caractérisé par le fait qu'un redresseur (42) destiné à redresser la tension alternative de sortie est connecté à l'enroulement secondaire du convertisseur de courant saturé (25) et par le fait que la bobine d'actionnement (20) du contacteur est agencée sous forme de bobine à courant continu.

3. Isolateur de section selon l'une des revendications 1 à 2, caractérisé par le fait qu'une résistance (35) non linéaire est connectée au secondaire du convertisseur de courant saturé (25).

4. Isolateur de section l'une des revendications 1 à 3, caractérisé par le fait que la tension secondaire du convertisseur de courant saturé (25) est appliquée à la bobine d'actionnement (20) par l'intermédiaire du contacteur (33) avec un retard qui est déterminé par une horloge électronique (34).

5. Isolateur de section selon l'une des revendications 1 à 4, caractérisé par le fait que l'enroulement primaire du convertisseur de courant saturé (25) est connecté à l'électrode auxiliaire (9) et à la deuxième section de caténaire (2), que le commutateur temporisé (34) est connecté à l'enroulement secondaire et que le commutateur temporisé, après écoulement du temps de temporisation, applique la tension secondaire à la bobine d'actionnement (20) (par l'intermédiaire du contact (33)).

6. Isolateur de section selon l'une des revendications 1 à 5, caractérisé par le fait que le porte-contact (13) mobile du contacteur comporte un moyen de verrouillage (36) en position fermée qui est maintenu par un aimant auxiliaire (37) pendant un temps de temporisation prédéterminé après extinction de l'arc.

7. Isolateur de section selon l'une des revendications 1 à 6, caractérisé par le fait que la durée de temporisation entre l'extinction de l'arc et la retombée de l'aimant auxiliaire (37) est obtenue au moyen d'un condensateur (38) qui est placé en parallèle avec la bobine de l'aimant auxiliaire (37) et, pendant la durée de l'arc électrique, est chargé par l'intermédiaire d'une diode (39) à partir du convertisseur de courant saturé (25).

8. Isolateur de section selon l'une des revendications 1 à 7 caractérisé par le fait que pour respecter exactement la temporisation entre l'extinction de l'arc et la retombée de l'aimant auxiliaire, il est prévu un commutateur temporisé (40) électronique qui coupe l'aimant auxiliaire (37) (par l'intermédiaire du contact 41), la capacité du condensateur (38) branché en parallèle avec l'entrée du commutateur électronique (40) étant supérieure à ce qui est nécessaire pour obtenir là temporisation lorsque le condensateur et la bobine de l'aimant auxiliaire sont branchés en parallèle.
